# EUROPÄISCHE PATENTANMELDUNG

(11) **EP 3 851 319 A1**
(43) Veröffentlichungstag der Anmeldung: **21.07.2021**
(21) Anmeldenummer: 21151251.2
(22) Anmeldetag: 13.01.2021
(51) Int. Cl.: B60N 2/34, B60P 3/38, B60P 3/39

(54) **TRAEGERPLATTE UND ZUSATZBETT MIT EINER TRAEGERPLATTE**

(30) Priorität: 17.01.2020 DE 102020101005
(71) Anmelder: ART - Axel Rosenwirth Technische Konfektion GmbH, 84307 Eggenfelden (DE)
(72) Erfinder: Rosenwirth, Axel, 84307 Eggenfelden (DE)
(74) Vertreter: Otten, Roth, Dobler & Partner mbB Patentanwälte

(57) **Zusammenfassung**

Es wird eine Trägerplatte (33, 34) für ein Zusatzbett vorgeschlagen, das an einem Fahrzeugsitz in einem Fahrzeug einrichtbar ist. Erfindungsgemäß weist die Trägerplatte (33, 34) einen Auflage-Flächenabschnitt und einen Steckabschnitt auf, wobei der Steckabschnitt derart ausgebildet ist, dass der Steckabschnitt der Trägerplatte (33, 34) an dem Fahrzeugsitz in einen Spaltbereich zwischen einem unteren Ende der Rückenlehnen-Polsterung und der Sitzboden-Polsterung für eine klemmende Fixierung der Trägerplatte (33, 34) an dem Fahrzeugsitz einsteckbar ist, wobei im eingesteckten Zustand des Steckabschnitts der Auflage-Flächenabschnitt der Trägerplatte (33, 34) an der Sitzboden-Polsterung abstützbar ist.

## Beschreibung

### Stand der Technik

Bei Fahrzeugen wie zum Beispiel Wohnmobilen, die z. B. in einer Fahrerkabine zwei oder mehr nebeneinander vorhandene Fahrzeugsitze aufweisen, werden zeitweise einrichtbare Einbauten angeboten, um die Nutzung des Fahrzeugs mit erweiterter Funktion wie beispielsweise mit einer Schlafmöglichkeit zu ermöglichen. Zum Beispiel sind zusammenbaubare Zusatzbetten zur Bereitstellung einer Liege- oder Schlafmöglichkeit insbesondere für Kinder in einer Fahrerkabine bekannt.

### Aufgabe und Vorteile der Erfindung

Aufgabe der vorliegenden Erfindung ist es, die Nutzung eines Fahrzeugs mit erweiterter Funktion verbessert zu ermöglichen, insbesondere zur Bereitstellung einer Liege- oder Schlafmöglichkeit in einer Fahrerkabine eines Fahrzeugs. Insbesondere soll sich die Zusatzfunktion durch eine unkomplizierte Montage und eine stabile und platzsparende Anordnung auszeichnen.

Diese Aufgabe wird durch die unabhängigen Ansprüche gelöst.

Die abhängigen Ansprüche thematisieren vorteilhafte und zweckmäßige Weiterbildungen der Erfindung.

Die Erfindung geht aus von einer Trägerplatte für ein Zusatzbett, das an einem Fahrzeugsitz in einem Fahrzeug für eine temporäre Nutzung des Zusatzbettes einrichtbar ist, wobei der Fahrzeugsitz eine Sitzboden-Polsterung und oberhalb der Sitzboden-Polsterung eine Rückenlehnen-Polsterung umfasst, wobei das aufgebaute Zusatzbett für eine Nutzung im Bereich oberhalb der Sitzboden-Polsterung des Fahrzeugsitzes ausgebildet ist.

Kern der Erfindung liegt darin, dass die Trägerplatte einen Auflage-Flächenabschnitt und einen Steckabschnitt aufweist, wobei der Steckabschnitt derart ausgebildet ist, dass der Steckabschnitt der Trägerplatte an dem Fahrzeugsitz in einen Spaltbereich zwischen einem unteren Ende der Rückenlehnen-Polsterung und der Sitzboden-Polsterung für eine klemmende Fixierung der Trägerplatte an dem Fahrzeugsitz einsteckbar ist, wobei im eingesteckten Zustand des Steckabschnitts der Auflage-Flächenabschnitt der Trägerplatte an der Sitzboden-Polsterung abstützbar ist.

Damit wird eine einfache und besonders stabile Befestigung und Abstützung der Trägerplatte und damit des Zusatzbettes an einem Fahrzeugsitz erreicht.

Denn in aller Regel weisen Fahrzeugsitze eine Rückenlehnen-Polsterung und eine davon getrennte Sitzboden-Polsterung auf, die dicht aneinander anstoßen im unteren Bereich der Rückenlehnen-Polsterung. Der so gebildete Spaltbereich kann erfindungsgemäß vorteilhaft genutzt werden.

Die Trägerplatte kann vorteilhaft an dem Fahrzeugsitz im Spaltbereich der Polsterung eingesteckt werden, ohne dass der Fahrzeugsitz verstellt werden muss, also in dessen Nutzstellung.

Vorzugsweise ist die Trägerplatte in der Form und der Größe für die Anbringung an genau einem Fahrzeugsitz abgestimmt, so dass bzw. um die Trägerplatte durch Einstecken des Steckabschnitts fixierbar ist.

Da das Zusatzbett regelmäßig sich über eine größere Breite erstrecken soll, also seitlich der Fahrzeugsitze über die Sitzboden-Polsterung hinaus, über zum Beispiel zwei nebeneinander vorhandene Fahrzeugsitze hinweg, und über einen gegebenenfalls vorhandenen Zwischenabstand bzw. Mittelgang zwischen den beiden Fahrzeugsitzen, ist für ein Zusatzbett in einer Fahrerkabine pro überdeckten Fahrzeugsitz jeweils eine Trägerplatte oder eine vergleichsweise breitere einzige Trägerplatte vorgesehen.

Das Zusatzbett erstreckt sich demgemäß regelmäßig über die wesentliche oder gesamte Breite einer Fahrerkabine des Fahrzeugs mit den darin vorhandenen sämtlichen Fahrzeugsitzen. Bei Wohnmobil-Fahrerkabinen sind regelmäßig zum Beispiel zumindest zwei Fahrzeugsitze nebeneinander vorhanden, deren jeweilige Sitzboden-Polsterung auf einer gemeinsamen Höhe vorhanden sind.

Auch ein gegebenenfalls vorhandener freier Zwischenbereich bzw. Mittelgang zwischen zwei Fahrzeugsitzen wird durch das Zusatzbett bzw. dessen Trägerplatten überbrückt bzw. überspannt. Die Längsrichtung bzw. die Liegerichtung des Zusatzbettes ist quer zur Sitzrichtung der betreffenden Fahrzeugsitze bzw. entspricht der Breitenrichtung der Fahrerkabine. Damit kann das in der Fahrerkabine aufgebaute Zusatzbett insbesondere für Kinder als bequeme Liege- und Schlafmöglichkeit genutzt werden.

Der Auflage-Flächenabschnitt der Trägerplatte stützt sich mit zumindest Teilbereichen seiner Unterseite auf Abschnitten einer Oberseite der Sitzboden-Polsterung ab. Damit wird zusätzlich zur Klemmung eine Mehrpunktabstützung bzw. eine flächige und damit stabile und kippsichere Abstützung der Trägerplatte auf dem Sitzboden-Polsterung bereitgestellt. Die Kippsicherung und die stabile Fixierung der Trägerplatte werden zusätzlich durch das klemmende Einstecken im Spaltbereich zwischen der Rückenlehnen-Polsterung und der Sitzboden-Polsterung ermöglicht. Dabei werden Polsterabschnitte etwas zusammengedrückt, so dass die Polsterabschnitte oberseitig und unterseitig satt gegen die Oberseite und gegen die Unterseite des Steckabschnitts drücken und damit die Trägerplatte sicher halten. Ein hinterer Rand des Steckabschnitts reicht im eingesteckten Zustand bis etwa eine Rückseite der Rückenlehne und/oder bis etwa eine Rückseite des Sitzbodens des Fahrzeugsitzes.

Vorzugsweise ist die Breite des Steckabschnitts, also in Breitenrichtung des Fahrzeugsitzes bzw. quer zur Sitzrichtung betrachtet, geringer als eine Gesamtbreite des Fahrzeugsitzes bzw. der Sitzboden-Polsterung. Der Steckabschnitt erstreckt sich in Breitenrichtung vorzugsweise lediglich über eine wesentliche Breite der Sitzboden- und der Rückenlehnen-Polsterung bzw. über einen mittleren Breitenbereich des Spaltbereichs des Fahrzeugsitzes.

Eine Grundrissfläche des Steckabschnitts ist regelmäßig wesentlich kleiner als eine Grundrissfläche des Auflage-Flächenabschnitts.

Die Montage des Zusatzbettes bzw. der Trägerplatte in der Fahrerkabine bzw. im Fahrerhaus ist vorteilhafterweise einfach und schnell bzw. in wenigen Handgriffen möglich.

Vorteilhaft ist auch, dass die Trägerplatten- bzw. Zusatzbett-Montage ohne ein Öffnen der Fahrertüren erfolgen kann bzw. von innen vom Schlafraum aus bzw. von einer Person in der Fahrerkabine aus möglich ist. Dies ist sicher, geschützt und bequem.

Vorteilhaft ist dabei außerdem, dass mit dem Zusatzbett eine durchgehende und ebene Liegefläche oberhalb der Sitzfläche der Fahrzeugsitze im Fahrzeug bereitgestellt wird. Die Trägerplatte muss lediglich einfach von vorne in den Zwischenraum zwischen Rückenlehnen-Polsterung und Sitzboden-Polsterung eingeschoben bzw. eingesteckt werden. Bei zwei oder selten drei überdeckten Fahrzeugsitzen werden vorzugsweise zwei oder drei getrennte Trägerplatten verwendet, pro Fahrzeugsitz eine Trägerplatte. Grundsätzlich ist eine durchgehende Trägerplatte nicht ausgeschlossen, jedoch etwas unhandlicher bzw. schwieriger zu montieren.

Der Auflage-Flächenabschnitt deckt im eingesteckten Zustand die Sitzboden-Polsterung ab bzw. steht über wenigstens einen vorderen Rand der Sitzboden-Polsterung über. Vorzugsweise erstreckt sich der Auflage-Flächenabschnitt der Trägerplatte zumindest nach vorne und gegebenenfalls seitlich zur Mitte etwas über die Sitzboden-Polsterung hinaus.

Die Trägerplatte reicht nach vorne bzw. in Sitzrichtung des jeweiligen Fahrzeugsitzes vorzugsweise bis an einen Armaturenträger heran. Gegebenenfalls stützt sich ein Abschnitt eines z. B. dem Steckabschnitt gegenüberliegenden vorderen Randes der Trägerplatte bzw. des Auflage-Flächenabschnitts an dem Armaturenträger ab. Diese beidseitige Fixierung, also mit dem Steckabschnitt einerseits und dem Rand am Auflage-Flächenabschnitt andererseits, erhöht zusätzlich die Stabilität und Kippsicherheit des Zusatzbettes. Die Trägerplatte kann sich zudem auch an innenseitigen Abschnitten der seitlich außen an die Fahrzeugsitze angrenzenden Fahrzeugtüren abstützen.

Der Auflage-Flächenabschnitt ist aufgrund des Plattenmaterials der Trägerplatte zumindest im Wesentlichen eben, flach, bzw. plattenförmig.

Der Steckabschnitt ist vorzugsweise rückwärtig bzw. nach außen in vorstehender Form an der Trägerplatte ausgestaltet. Insbesondere steht der Steckabschnitt zu benachbarten Abschnitten eines an den Steckabschnitt vorzugsweise beidseitig anschließenden geraden Randverlaufs der Trägerplatte bzw. des Auflage-Flächenabschnitts vor. Der betreffende Rand der Trägerplatte gehört zu einer rückwärtigen Seite der Trägerplatte bzw. des Auflage-Flächenabschnitts, die entgegen der Fahrtrichtung bzw. entgegen der Sitzrichtung des Fahrzeugsitzes an der Trägerplatte im montierten Zustand vorhanden ist.

Vorzugsweise weist die Trägerplatte einen Auflage-Flächenabschnitt auf, der in der Grundform viereckig bzw. rechteckig oder quadratisch ist.

Es ist von Vorteil, wenn der Steckabschnitt fluchtend zum Auflage-Flächenabschnitt ausgerichtet ist. Damit ist die Trägerplatte vorteilhaft komplett bzw. unmittelbar aus einem Plattenmaterial herstellbar.

Insbesondere sind der Steckabschnitt und der Auflage-Flächenabschnitt bündig bzw. durchgehend ohne Naht gestaltet. Der Steckabschnitt bildet eine Erweiterung bzw. seitliche Verlängerung des Auflage-Flächenabschnitts.

Eine Grundfläche oder ein Grundriss des Steckabschnitts ist vorzugsweise kleiner als 20 Prozent vorzugsweise kleiner als 10 Prozent der Grundfläche bzw. des Grundrisses des Auflage-Flächenabschnitts.

Der Steckabschnitt ist in seiner Grundform vorzugsweise laschenförmig, zungenförmig, rechteckig bzw. streifenförmig.

Weiter ist es vorteilhaft, dass eine vom Steckabschnitt aufgespannte Ebene versetzt ist zu einer von dem Auflage-Flächenabschnitt aufgespannten Ebene. Damit wird ein HöhenVersatz zwischen dem Steckabschnitt und dem Auflage-Flächenabschnitt eingerichtet. Damit wird vorteilhaft eine zumindest im Wesentlichen horizontale Ausrichtung des Auflage-Flächenabschnitts erreicht. Denn es ist regelmäßig so, dass der Spaltbereich zwischen dem unteren Ende der Rückenlehnen-Polsterung und der Sitzboden-Polsterung in vertikaler Richtung tiefer liegt als erhöhte seitliche Bereiche der Sitzboden-Polsterung. Ohne Absatz der Ebenen von Steckabschnitt und Auflage-Flächenabschnitt würde der Auflage-Flächenabschnitt räumlich schräg stehen, wobei ein in Sitzrichtung vorne gelegener Seitenrand des Auflage-Flächenabschnitts höher läge als der gegenüberliegenden Seitenrand, an dem der Steckabschnitt anschließt.

Dieses für eine bequeme Nutzung des Zusatzbettes nachteilige Szenario wird vermieden, auch wenn die Sitzboden-Polsterung eines Fahrzeugsitzes ergonomisch gestaltet bzw. oberseitig konturiert ist.

Mit den versetzen Ebenen von Steckabschnitt und Auflage-Flächenabschnitt wird ein Versatz eingerichtet, durch welchen die Erhöhung von Abschnitten der Sitzboden-Polsterung in Bezug zu tieferen Abschnitten bzw. zum Spaltbereich zwischen dem unteren Ende der Rückenlehnen-Polsterung und der Sitzboden-Polsterung ausgleichbar ist. Damit kommen Bereiche der Unterseite des Auflage-Flächenabschnitts gleichmäßig in abstützende Auflage an oberseitig vertikal höchsten Abschnitten der Sitzboden-Polsterung.

Es ist überdies vorteilhaft, wenn der Steckabschnitt unmittelbar an den Auflage-Flächenabschnitt anschließt. Dies ist kompakt bauend. Der Steckabschnitt schließt vorzugsweise als eine Verlängerung an den Auflage-Flächenabschnitt an.

Der Steckabschnitt kann einstückig mit dem Auflage-Flächenabschnitt verbunden sein oder der Steckabschnitt ist zum Auflage-Flächenabschnitt ein zusätzliches Bauteil, das mit dem Auflage-Flächenabschnitt lösbar oder unlösbar verbunden ist.

Eine vorteilhafte Modifikation der Erfindung zeichnet sich dadurch aus, dass ein Zwischenabschnitt zwischen dem Auflage-Flächenabschnitt und dem Steckabschnitt vorhanden ist. Dies kann zum Beispiel ein Verbindungsabschnitt sein, über den der Steckabschnitt und der Auflage-Flächenabschnitt miteinander verbunden sind. Der Zwischenabschnitt ist zum Beispiel winklig und/oder schräg ausgerichtet zur vom Auflage-Flächenabschnitt aufgespannten Ebene.

Auch liegt ein Vorteil darin, dass der Steckabschnitt und der Auflage-Flächenabschnitt einstückig ausgebildet sind. Vorzugsweise ist die Trägerplatte komplett z. B. aus einem Plattenelement gebildet, z. B. aus einer Holz- oder Metallplatte. Der Auflage-Flächenabschnitt und/oder der Steckabschnitt sind zumindest im Wesentlichen eben, flach und plattenförmig. Eine Dicke der Trägerplatte liegt z. B. im Zentimeterbereich.

Vorteilhafterweise weist die Trägerplatte eine Ausnehmung auf. Vorzugsweise sind mehrere Ausnehmungen bevorzugt zumindest im Auflage-Flächenabschnitt vorgesehen. Die Ausnehmung ist vorzugsweise eine innere bzw. nicht randseitig nach außen offene Ausnehmung bzw. außen komplett geschlossene Ausnehmung, die durch Materialbereiche der Trägerplatte umschlossen ist. Dies bewirkt durch z. B. mehrere gezielt vorgegebene Ausnehmungen eine vorgebbare Flexibilität der Trägerplatte bzw. des Auflage-Flächenabschnitts. Damit kann insbesondere ein Lattenrost-Effekt erzielt werden. Außerdem ist eine Gewichtsersparnis gegenüber einer Trägerplatte ohne Ausnehmungen möglich.

Die vorzugsweise mehreren Ausnehmungen sind insbesondere regelmäßig angeordnete materialfreie Aussparungen oder Löcher im Auflage-Flächenabschnitt, z. B. mehrere parallele streifenförmige Ausnehmungen.

Außerdem ist es von Vorteil, dass die Trägerplatte an einen Innenraum des Fahrzeugs angepasst ausgebildet ist. Vorzugsweise sind eine Flächenform und/oder eine Randform der Trägerplatte, insbesondere des Auflage-Flächenabschnitts, an den Innenraum des Fahrzeugs bzw. an eine Kontur des Innenraums wie eines Armaturenträgers angepasst. Damit kann eine optimierte Raumausnutzung zur Bereitstellung einer möglichst großflächigen Auflage- bzw. Liege- bzw. Schlaffläche des mit der Trägerplatte bereitstellbaren Zusatzbettes erreicht werden.

Die Randformgebung der Trägerplatte betrifft insbesondere einen dem Steckabschnitt gegenüberliegender bzw. vorderen Rand der Trägerplatte. Dieser Rand grenzt im Nutzzustand insbesondere an einen Armaturenträger an.

Die Erfindung erstreckt sich außerdem auf ein Zusatzbett für eine temporäre Nutzung des Zusatzbettes in einem Fahrzeug, wobei das Zusatzbett an einem Fahrzeugsitz in dem Fahrzeug einrichtbar ist. Das Zusatzbett zeichnet sich dadurch aus, dass eine Trägerplatte nach einer der oben beschriebenen Ausführungen vorgesehen ist. Damit lassen sich mit dem Zusatzbett die oben beschriebenen Vorteile erzielen.

Weiter ist es vorteilhaft, dass eine Matratze vorgesehen ist, welche auf die Trägerplatte auflegbar ist.
Die Matratze ist vorzugsweise in ihrer Größe bzw. Form auf die Trägerplatte bzw. die vom Auflage-Flächenabschnitt bereitgestellten Bereich. Die Matratze ist vorzugsweise einstückig abgestimmt, vorzugsweise zur Überdeckung von zwei oder mehr Trägerplatten, welche das Zusatzbett umfasst. Die Matratze erstreckt sich demgemäß über eine wesentliche bzw. gesamte Fläche des Auflage-Flächenabschnitts der von den in einer Fahrerkabine auf den zum Beispiel zwei Fahrzeugsitzen montierten Trägerplatten.

Vorteilhaft ist es, wenn die Matratze eine Kontur aufweist, welche im eingerichteten Zustand des Zusatzbettes auf das Zusatzbett umgebende Bereiche im Fahrzeug angepasst ist.

Die Kontur der Matratze ist vorzugsweise angepasst an die Fahrzeugsitze, an eine Innenseite der Außentüren und/oder an eine Form eines Armaturenträgers.

Weiter ergibt sich ein Vorteil daraus, dass das Zusatzbett an zwei seitlich benachbarten Fahrzeugsitzen einrichtbar ist, wobei zwei Trägerplatten vorgesehen sind, welche an dem jeweiligen Fahrzeugsitz in einen Spaltbereich zwischen einem unteren Ende der Rückenlehnen-Polsterung und der Sitzboden-Polsterung für eine klemmende Fixierung der Trägerplatte an dem Fahrzeugsitz einsteckbar ist.

Die Matratze ist eine vorzugsweise einstückige durchgehende Matratze, die sich über z. B. zwei oder mehr als zwei Trägerplatten, diese oberhalb abdeckend, erstreckt.

Vorteilhafterweise ist ein Zwischenelement vorgesehen, welches zwischen zwei Trägerplatten vorhanden ist. Damit kann ein z. B. mittlerer Bereich in der Fahrerkabine wie ein Mittelgang zwischen zwei Fahrzeugsitzen überbrückt und als stabile Auflagefläche eingerichtet werden für das Zusatzbett. Das Zwischenelement ist vorzugsweise innerhalb der Matratze integriert bzw. in dieser untergebracht.

Schließlich ist es von Vorteil, dass einer Verbindungsanordnung zur randseitigen lösbaren Verbindung von einender zugewandten Rändern von zwei Trägerplatten im eingerichteten Zustand des Zusatzbettes vorhanden ist.

Vorzugsweise ist ein Reißverschluss oder dergleichen vorgesehen. Dies dient der Stabilisierung des Zusatzbettes bzw. der mehrteiligen Trägerplatte.

Auch liegt ein Vorteil darin, wenn eine flexible Umhüllung vorgesehen ist, wobei innerhalb der Umhüllung die Trägerplatte und die Matratze des Zusatzbettes im nicht genutzten Zustand des Zusatzbettes unterbringbar sind. In der zum Transport und zur schützenden Lagerung vorgesehenen Umhüllung können die z. B. zwei Trägerplatten außenseitig stabilisierend aufgenommen sein. Dazwischen kann vorteilhaft die Matratze untergebracht sein. Dies ermöglicht eine praktische manuelle Transportfähigkeit des Zusatzbettes.

### Figurenbeschreibung

Nachfolgend sind weitere Merkmale und Vorteile der Erfindung anhand von stark schematisch dargestellten Ausführungsbeispielen näher erläutert.

Im Einzelnen zeigt:
- Fig. 1: in einer perspektivischen Ansicht schräg von oben eine Trägerplatte,
- Fig. 2: die Trägerplatte gemäß Fig. 1 in einer alternativen Ausbildung,
- Fig. 3: eine weitere Trägerplatte in einer perspektivischen Ansicht schräg von oben,
- Fig. 4: die Trägerplatte gemäß Fig. 3 in einer alternativen Ausbildung,
- Fig. 5: ein Fahrzeugsitz mit einer eingesteckten Trägerplatte perspektivisch schräg von vorne,
- Fig. 6: die Anordnung gemäß Fig. 5 perspektivisch schräg von hinten,
- Fig. 7: der Fahrzeugsitz mit der eingesteckten transparent dargestellten Trägerplatte gemäß Fig. 5 von der Seite,
- Fig. 8: zwei seitlich nebeneinander positionierte Fahrzeugsitze mit jeweils einer eingesteckten transparenten Trägerplatte perspektivisch schräg von hinten,
- Fig. 9: die zwei Fahrzeugsitze gemäß Fig. 8 perspektivisch schräg von hinten mit alternativ ausgebildeten transparent dargestellten Trägerplatten,
- Fig. 10: eine perspektivische Seitenansicht auf eine Fahrerkabine mit zwei Fahrzeugsitzen,
- Fig. 11: die Fahrerkabine gemäß Fig. 10 mit jeweils einer Trägerplatte an den beiden Fahrzeugsitzen,
- Fig. 12: die Fahrerkabine gemäß Fig. 10 mit einem Zusatzbett umfassend die Trägerplatten gemäß Fig. 11 und eine darauf aufgelegte Matratze,
- Fig. 13: die Matratze des Zusatzbettes gemäß Fig. 12 perspektivisch schräg von oben in Alleindarstellung,
- Fig. 14: einen perspektivischen Ausschnitt auf eine andere Fahrerkabine mit zwei Fahrzeugsitzen mit einem alternativen Zusatzbett,
- Fig. 15: die Matratze des Zusatzbettes gemäß Fig. 14 perspektivisch schräg von oben in Alleindarstellung und
- Fig. 16: ein Zusatzbett in einem Transportzustand in einer Transporttasche.

Nachfolgend sind für sich entsprechende Elemente unterschiedlicher Ausführungsbeispiele teilweise die gleichen Bezugszeichen verwendet.

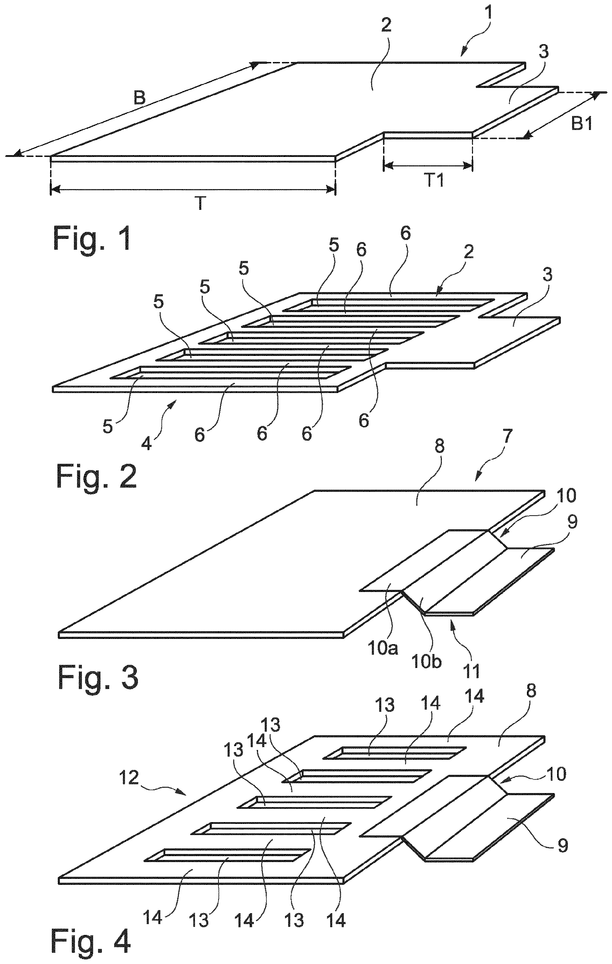

Fig. 1 zeigt schematisch ein erstes Ausführungsbeispiel einer erfindungsgemäßen Trägerplatte 1 mit einem Auflage-Flächenabschnitt 2 und einem an den Auflage-Flächenabschnitt 2 anschließenden Steckabschnitt 3.

Die Trägerplatte 1 ist plattenförmig zum Beispiel aus einer ursprünglich rechteckförmigen Hartholzplatte hergestellt zum Beispiel in die fertige mehreckige Form zugesägt.

Die Trägerplatte 1 weist eine gleichbleibende Dicke von zum Beispiel ein bis zwei Zentimeter auf und ist vollflächig geschlossen.

Der Auflage-Flächenbereich 2 ist rechteckförmig und weist eine Breite B und eine Tiefe T auf. In einem rückwärtigen Bereich der Trägerplatte 1, in Breitenrichtung mittig steht der ebenfalls rechteckförmige Steckabschnitt 3 an der Trägerplatte 1 vor.

Der Steckabschnitt 3 weist eine Breite B1 und eine Tiefe T1 auf, die jeweils in einer Größenordnung von circa 50 % geringer sind als die Tiefe T bzw. die Breite B des Auflage-Flächenabschnitts 2.

Eine zur Trägerplatte 1 alternative Trägerplatte 4 zeigt Fig. 2, wobei die Trägerplatte 4 einen Auflage-Flächenabschnitt 2 und einen Steckabschnitt 3 umfasst.

Die Trägerplatte 4 unterscheidet sich von der Trägerplatte 1 allein durch fünf identische, parallele streifenförmige materialfreie Ausnehmungen 5 bzw. Rechtecklöcher im Auflage-Flächenabschnitt 2. Die gleichmäßig angeordneten länglichen Ausnehmungen 5 sind in ihrer Längserstreckung parallel zu gegenüberliegenden in Tiefenrichtung sich erstreckenden Rändern des Auflage-Flächenabschnitts 2 ausgerichtet. Damit werden sechs zu den Ausnehmungen 5 parallele streifenförmige jeweils gleich breite Stege 6 von dem Auflage-Flächenabschnitt 2 gebildet. Demgemäß wird mit den Ausnehmungen 5 bzw. den Stegen 6 eine Lattenrost-Funktion für ein mit der Trägerplatte 4 gebildetes Zusatzbett bereitgestellt. Die Ausnehmungen 5 bzw. die Stege 6 erstrecken sich demgemäß in ihrer Länge quer zu einer Liegerichtung des mit der Trägerplatte 4 gebildeten Zusatzbettes.

Die Trägerplatten 1 und 4 eignen sich insbesondere für Fahrzeugsitze, welche keine ergonomisch konturierte Sitzboden-Polsterung aufweisen und/oder die eine ebene, horizontal ausgerichtete Sitzfläche besitzen.

Fig. 3 zeigt eine weitere alternative Trägerplatte 7 mit einem Auflage-Flächenabschnitt 8 und einem Steckabschnitt 9. Zwischen dem Auflage- Flächenabschnitt 8 und dem Steckabschnitt 9 ist ein Zwischenabschnitt 10 vorgesehen. Der Zwischenabschnitt 10 umfasst zwei winklig zueinander ausgerichtete miteinander einstückig verbundene Flächenbereiche 10a und 10b, wobei der Steckabschnitt 9 an dem Flächenbereich 10b einstückig anschließt. Demgemäß bildet der Zwischenabschnitt 10 und der Steckabschnitt 9 ein einziges Bauteil zum Beispiel ein zweifach umgekantetes Blechbauteil 11. Das Blechbauteil 11 ist zum Beispiel über eine Unterseite des Flächenbereichs 10a mit einem randnahen Bereich einer Oberseite des Auflage-Flächenabschnitts 8 fest verbunden zum Beispiel verschraubt oder verklebt. Vorzugsweise ist der Flächenbereich 10a bündig versenkt z. B. zur ebenen Oberseite oder Unterseite des Auflage-Flächenabschnitts 8.

Gemäß Fig. 4 unterscheidet sich eine zur Trägerplatte 7 abgewandelte Trägerplatte 12 durch fünf identische, parallele streifenförmige materialfreie Ausnehmungen 13 bzw. Rechtecklöcher im Auflage-Flächenabschnitt 8. Die gleichmäßig angeordneten länglichen Ausnehmungen 13 sind in ihrer Längserstreckung parallel zu gegenüberliegenden in Tiefenrichtung sich erstreckenden Rändern des Auflage-Flächenabschnitts 8 ausgerichtet. Damit werden sechs zu den Ausnehmungen 5 parallele streifenförmige jeweils gleich breite Stege 14 von dem Auflage-Flächenabschnitt 8 gebildet.

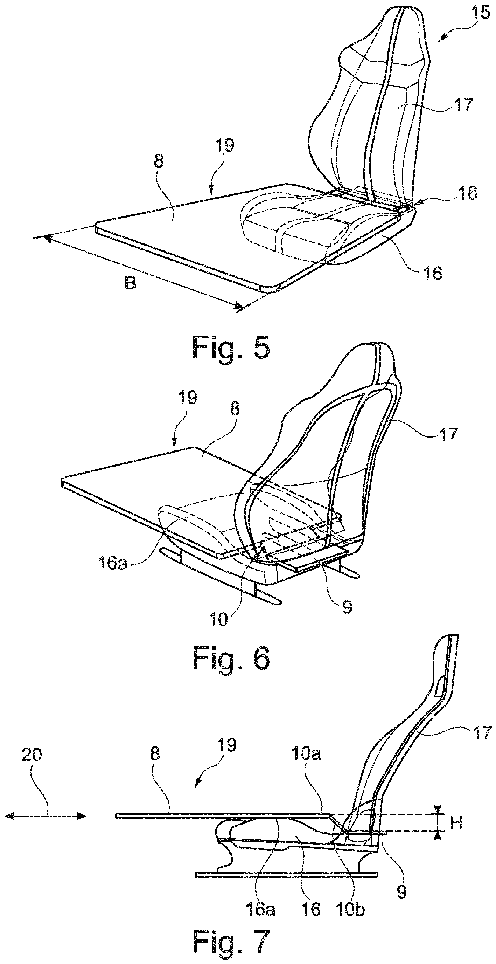

Fig. 5 zeigt einen Fahrzeugsitz 15 in einer Nutzstellung in einem Fahrzeug (nicht dargestellt) mit einer Sitzboden-Polsterung 16 und einer Rückenlehnen-Polsterung 17. Zwischen der Sitzboden-Polsterung 16 und der Rückenlehnen-Polsterung 17 ist ein horizontal in Breitenrichtung des Fahrzeugsitzes 15 ausgerichteter und in Tiefenrichtung sich erstreckender Spaltbereich 18 vorhanden. Im Spaltbereich 18 berührt ein oberseitiger rückwärtiger Randabschnitt der Sitzboden-Polsterung 16 einen unterseitigen Randabschnitt der Rückenlehnen-Polsterung 17, die aneinander in drückende Anlage kommen.

Am Fahrzeugsitz 15 ist eine Trägerplatte 19 eingesteckt klemmend fixiert. Die Trägerplatte 19 ist bis auf die Form bzw. Größe eines Auflage-Flächenabschnitts 8 entsprechend der Trägerplatte 7 aufgebaut. Die Trägerplatte 19 umfasst neben dem Auflage-Flächenabschnitt 8 einen Steckabschnitt 9 und einen Zwischenabschnitt 10. Der Zwischenabschnitt 10 mit den Flächenabschnitten 10a und 10b und der Steckabschnitt 9 sind einstückig durch ein zweifach umgekantetes Blechbauteil 11 gebildet. Mit dem Zwischenabschnitt 10 bzw. mit dem abgeschrägten Flächenbereich 10b wird eine Winkelkonstruktion mit einem Absatz zwischen dem Auflage-Flächenabschnitt 8 und dem Steckabschnitt 9 bereitgestellt. Damit wird erreicht, dass ein Einschieben des Steckabschnitts 9 zwischen der Sitzfläche der Sitzboden-Polsterung 16 und einem Rückenlehnenbereich der Rückenlehnen-Polsterung 17 einfach möglich ist.

Außerdem ergibt sich aufgrund des Absatzes, dass eine von dem Auflage-Flächenabschnitt 8 aufgespannte Ebene versetzt oberhalb vorhanden ist zu einer von dem Steckabschnitt 9 aufgespannten Ebene. Damit wird dem Umstand Rechnung getragen, dass der Spaltbereich 18 in vertikaler bzw. senkrechter Richtung betrachtet tiefer liegt als seitliche höchste Erhebungen 16a der Sitzboden-Polsterung 16, auf welcher die Unterseite des Auflage-Flächenabschnitts 8 aufliegt. Der vom abgeschrägten Flächenbereich 10b gebildete Absatz zwischen dem Auflage-Flächenabschnitt 8 und dem Steckabschnitt 9 mit der vertikalen Absatzhöhe H (s. Fig. 7) gleicht diesen Niveauunterschied aus. Dadurch ergibt sich, dass der Auflage-Flächenabschnitt 8 im eingesteckten Zustand des Steckabschnitts 9 im Spaltbereich 18 gemäß Fig. 5-7 parallel zur Horizontalen 20 ausgerichtet ist. Dadurch ist es vorteilhaft möglich, dass der Auflage-Flächenabschnitt 8 eine ideale horizontale Abstützung bzw. Auflage für eine Matratze eines mit der Trägerplatte 19 am Fahrzeugsitz 15 anbaubaren Zusatzbettes bildet.

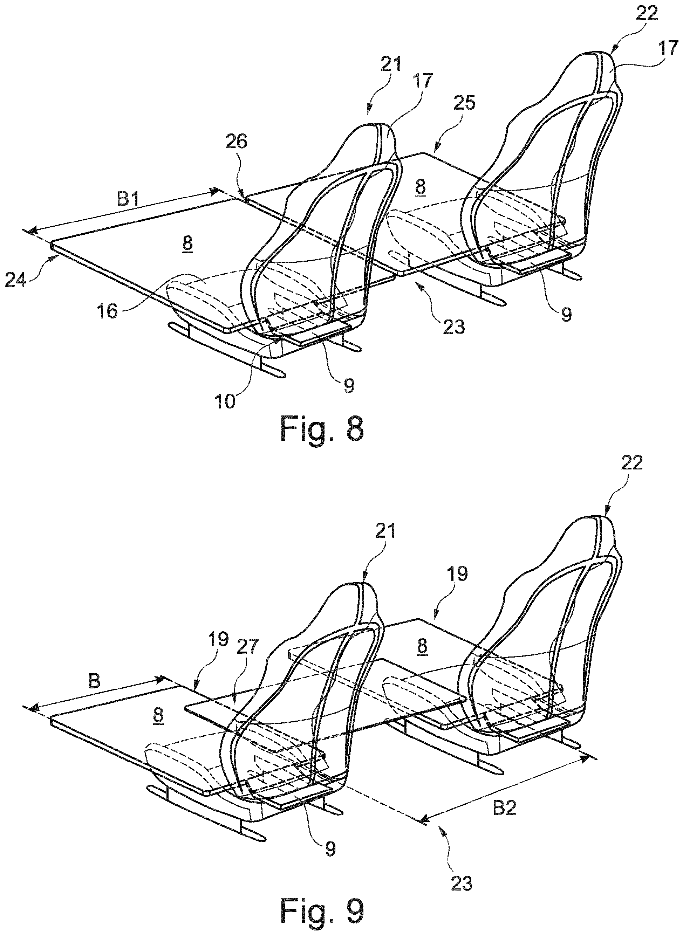

Fig. 8 zeigt eine typische Anordnung von zwei nebeneinander identisch ausgerichteten und positionierten Fahrzeugsitzen 21 und 22 in einer Fahrerkabine zum Beispiel eines Wohnmobils. Der Fahrzeugsitz 21 ist zum Beispiel ein Fahrersitz und der Fahrzeugsitz 22 ist zum Beispiel ein Beifahrersitz des Wohnmobils. Zwischen den beiden Fahrzeugsitzen 21 und 22 ist ein Abstand mit einem freien Mittelgang 23 vorhanden, mit einer Breite, die zum Beispiel etwa der Breite eines der Fahrzeugsitze 21, 22 entspricht.

Zur Bildung eines temporären Zusatzbettes im Bereich der Fahrerkabine mit den beiden Fahrzeugsitzen 21, 22 ist an beiden Fahrzeugsitzen 21, 22 jeweils eine Trägerplatte 24 bzw. 25 eingesteckt vorhanden. Damit wird eine erfindungsgemäße zweiteilige Trägerplatten-Version bereitgestellt. Beide Trägerplatten 24, 25 sind im Grundaufbau wie die Trägerplatte 19 gestaltet. Lediglich der Zwischenabschnitt 10 und der Steckabschnitt 9 sind nicht mittig zur Breite B1 rückwärtig vorhanden, sondern außermittig bzw. etwas versetzt zur geometrischen Mitte der Breite B1. Außerdem ist die Breite B1 der beiden gleich breiten Trägerplatten 24, 25 im Vergleich zur Breite B der Trägerplatte 19 größer, zum Beispiel um eine Maß größer, das etwa der halben Breite des Mittelgangs 23 entspricht.

Dadurch wird auch der Bereich des Mittelgangs 23 von den Trägerplatten 24, 25 überspannt, jeweils zur Hälfte von der Trägerplatte 24 und der Trägerplatte 25. Damit wird auf den Innenraum der Fahrerkabine bezogen über dessen gesamte Breite gemäß des zweifachen Wertes von B1 und dessen gesamte Tiefe, also über den Bereich der beiden Fahrersitze 21, 22 und den Mittelgang 23 eine flächige, durchgehende Abstützung bzw. Fläche durch die Auflage-Flächenabschnitte 8 der beiden Trägerplatten 24 und 25 gebildet.

Zur Stabilisierung der beiden Trägerplatten 24, 25 im Bereich des Mittelganges 23 bzw. eines Spaltes 26 zwischen den beiden Trägerplatten 24, 25, ist vorzugsweise eine Verbindungsanordnung zur randseitigen lösbaren Verbindung der zwei Trägerplatten 24, 25 vorgesehen. Die Verbindungsanordnung ist zum Beispiel durch einen Reißverschluss oder einen Klettverschluss gebildet.

Die Verbindungsanordnung überbrückt den gleichmäßig breiten Spalt 26, der sich in Sitzrichtung der beiden Fahrzeugsitze 21, 22 bzw. quer zur Liegerichtung des bildbaren Zusatzbettes erstreckt bzw. der sich zwischen einander zugewandten, in Richtung der Tiefe verlaufenden Außenränder der beiden Trägerplatten 24, 25 ergibt, wobei die beiden Außenränder z. B. wenige Millimeter voneinander getrennt sind.

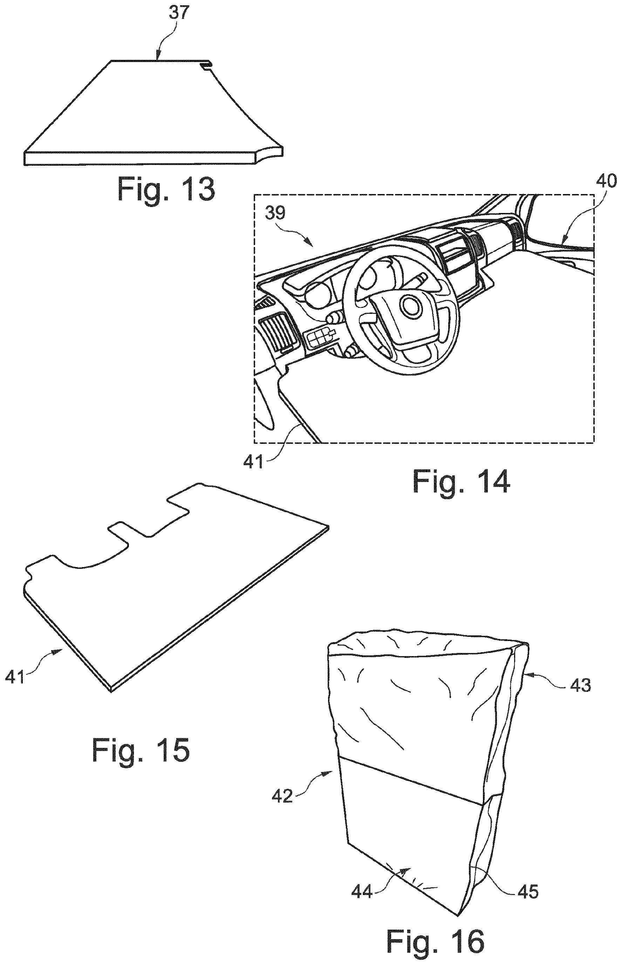

Auf den beiden gemäß Fig. 8 eingesteckten Trägerplatten 24, 25 bzw. auf den beiden Auflage-Flächenabschnitten 8 wird zur Fertigstellung des Zusatzbettes eine Matratze aufgelegt, die vorzugsweise in ihrer Kontur passend an die rückwärtigen Rückenlehnen-Polsterungen 17, seitlich gegenüberliegende Fahrzeugtüren und einen frontseitigen Armaturenträger der Fahrerkabine angepasst ist. Die Fig. 13 und 15 zeigen zwei Beispiele solcher in ihrer Kontur an eine jeweilige Fahrerkabine angepassten Matratzen 37 bzw. 41.

Fig. 9 zeigt eine bei den Fahrzeugsitzen 21 und 22 gemäß Fig. 8 anwendbare alternative Anordnung, die eine erfindungsgemäße dreiteilige Trägerplatten-Version betrifft, umfassend zwei identische Trägerplatten 19. Die beiden Trägerplatten 19 entsprechen der Trägerplatte 19 gemäß der Fig. 5-7 und weisen damit eine Breite B auf, die geringfügig größer als die Breite der Sitzboden-Polsterungen 16 ist bzw. die geringer ist als die Breite B1 der Trägerplatte 24 bzw. 25. An jedem der beiden

Fahrzeugsitze 21 und 22 ist jeweils eine Trägerplatte 19 eingesteckt vorhanden. Dadurch bleibt der Mittelgang 23 frei bzw. ist nicht überdeckt von den beiden Trägerplatten 19. Zur mechanisch stabilen Überdeckung bzw. Überbrückung des von den beiden Trägerplatten 19 nicht abgedeckten Mittelgangs 23 ist eine dritte Zwischen-Trägerplatte 27 vorgesehen. Die Zwischen-Trägerplatte 27 ist viereckig bzw. rechteckig und weist eine Breite B2 auf, die größer als die Breite des Mittelgangs 23 ist. Damit überlappt die Zwischen-Trägerplatte 27 den Abstand bzw. Freiraum zwischen den beiden Trägerplatten 19. Die Tiefe der Trägerplatte 27 ist vorzugsweise etwas geringer als die Tiefe der Trägerplatten 19 bzw. der Auflage-Flächenabschnitte 8. Die Tiefe der Trägerplatte 27 kann aber alternativ der Tiefe der Trägerplatten 19 entsprechen.

Mit der dreiteiligen Trägerplatten-Version wird gegenüber der zweiteiligen Version gemäß Fig. 8 eine etwas stabilere Unterkonstruktion für das dazugehörige Zusatzbett erreicht. Der Liegekomfort ist in der Regel etwas härter als bei der zweiteiligen Version gemäß Fig. 8.

Die mittlere Trägerplatte 27 ist vorzugsweise in der dazugehörigen Matratze integriert vorhanden, so dass erst mit dem Auflegen der Matratze auf den beiden Trägerplatten 19 auch die Trägerplatte 27 in Auflage auf den Trägerplatten 19 gelangt und den Mittelgang 23 überdeckt.

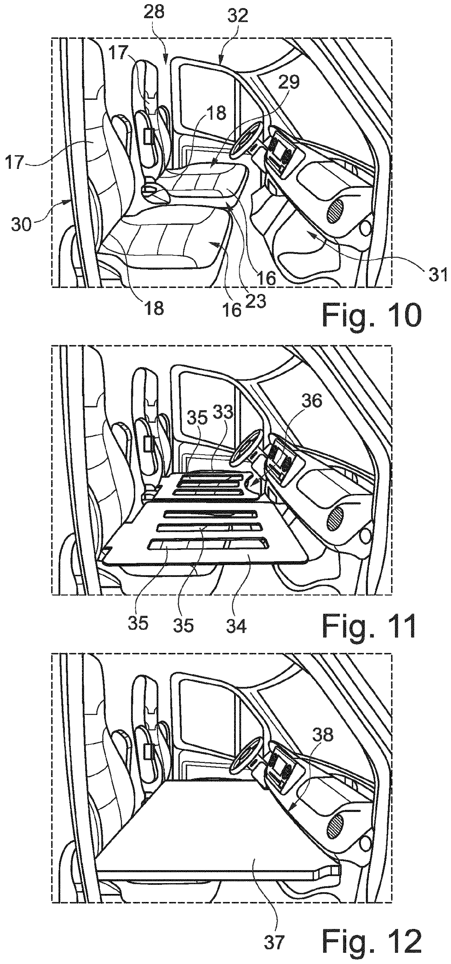

Ausgehend von einem Wohnmobil mit einer schematisch dargestellten Fahrerkabine 28 gemäß Fig. 10 weist die Fahrerkabine 28 zwei Fahrzeugsitze auf, umfassend einen Fahrersitz 29 und einen Beifahrerersitz 30. Beide Fahrzeugsitze 29, 30 umfassen jeweils eine Sitzboden-Polsterung 16 und eine Rückenlehnen-Polsterung 17, zwischen denen ein horizontaler Spaltbereich 18 vorhanden ist. Außerdem ist ein freier Mittelgang 23 zwischen den beiden Fahrzeugsitzen 29, 30 vorgesehen. In Fahrt- bzw. Sitzrichtung vorne ist in der Fahrerkabine 28 ein Armaturenträger 31 vorhanden. Seitlich wird die Fahrerkabine 28 von Fahrzeugtüren 32 begrenzt, von denen eine fahrerseitige Fahrzeugtüre 32 ersichtlich ist.

Gemäß Fig. 11 ist eine Trägerplatte 33 mit einem Steckabschnitt im Spaltbereich 18 des Fahrersitzes 29 eingeschoben und eine weitere Trägerplatte 34 ist mit ihrem Steckabschnitt im Spaltbereich 18 am Beifahrersitz 30 eingeschoben. Beide Trägerplatten 33, 34 weisen drei parallele materialfreie rechteckförmige Ausnehmungen 35 auf. Die Trägerplatte 33 weist eine angepasste vorderseitige konkav geformte Randkontur 36 auf. Damit kann die Trägerplatte 33 passend an eine Kontur des Armaturenträgers 31 abgestützt eingelegt werden. Die Trägerplatten 33, 34 sind horizontal ausgerichtet abgestützt und mit ihren Oberseiten zueinander fluchtend vorhanden.

Auf die beiden Trägerplatten 33, 34 ist zur Bildung eines Zusatzbettes 38 eine durchgehende Matratze 37 aufgelegt. Mit der Matratze 37 wird eine durchgehende ebene horizontal ausgerichtete und stabil abgestützte Nutzfläche gebildet, die als Liegefläche des Zusatzbettes 38 dient, zum Beispiel für ein schnell und einfach auf- und abbaubares temporäres Kinderbett in der Fahrerkabine 28.

Die formgeschnittene Matratze 37 in Einzeldarstellung schräg von oben zeigt Fig. 13.

Ein Zusatzbett 40 in einer Fahrerkabine 39 eines anderen Wohnmobils zeigt Fig. 14. Das Zusatzbett 40 weist ebenfalls eine individuell an die Fahrerkabine 39 angepasste bzw. formgeschnittene Matratze 41 auf (s. Fig. 15).

Fig. 16 zeigt ein verpacktes Zusatzbett 42 in einem Transportzustand, wobei das Zusatzbett 42 kompakt und für eine einfachen Transport in einer Transporttasche 43 untergebracht ist. Die Transporttasche 43 weist außen vorzugsweise einen Hand-Tragegriff zum manuellen Transport auf.

Vorzugsweise sind die beiden Trägerplatten außen mit einem Überzug bzw. einer Verkleidung 44 zum Beispiel aus einem Gewebe umhüllt. Die Trägerplatten werden beim Transport für die Verpackung des Zusatzbettes 42 in der Transporttasche 43 als außenliegenden versteifende Wandungen der Verpackung verwendet. In Nähte der Verkleidung 44 ist ein Reißverschlussteil eines teilbaren Reißverschlusses 45 eingenäht, das mit einem passenden Reißverschlussteil des Reißverschlusses 45, das an der Transporttasche an deren Rand vorhanden ist, verschließend verbindbar ist. Zwischen den außenliegenden Trägerplatten ist die z. B. zweiteilige Matratze eingebettet.

Wenn die Trägerplatten keine äußere Verkleidung aufweisen, sind die Reißverschlussteile seitlich an die Trägerplatten angeheftet oder anderweitig daran befestigt.

**Bezugszeichenliste**

| | | |
|---|---|---|
| 1 | Trägerplatte | 33 Trägerplatte |
| 2 | Auflage-Flächenabschnitt | 34 Trägerplatte |
| 3 | Steckabschnitt | 35 Ausnehmung |
| 4 | Trägerplatte | 36 Randkontur |
| 5 | Ausnehmung | 37 Matratze |
| 6 | Steg | 38 Zusatzbett |
| 7 | Trägerplatte | 39 Fahrerkabine |
| 8 | Auflage-Flächenabschnitt | 40 Zusatzbett |
| 9 | Steckabschnitt | 41 Matratze |
| 10 | Zwischenabschnitt | 42 Zusatzbett |
| 10a | Flächenbereich | 43 Transporttasche |
| 10b | Flächenbereich | 44 Verkleidung |
| 11 | Blechbauteil | 45 Reißverschluss |
| 12 | Trägerplatte | |
| 13 | Ausnehmung | |
| 14 | Steg | |
| 15 | Fahrzeugsitz | |
| 16 | Sitzboden-Polsterung | |
| 16a | Erhebung | |
| 17 | Rückenlehnen-Polsterung | |
| 18 | Spaltbereich | |
| 19 | Trägerplatte | |
| 20 | Horizontale | |
| 21 | Fahrzeugsitz | |
| 22 | Fahrzeugsitz | |
| 23 | Mittelgang | |
| 24 | Trägerplatte | |
| 25 | Trägerplatte | |
| 26 | Spalt | |
| 27 | Zwischen-Trägerplatte | |
| 28 | Fahrerkabine | |
| 29 | Fahrersitz | |
| 30 | Beifahrersitz | |
| 31 | Armaturenträger | |
| 32 | Fahrzeugtüre | |

## Patentansprüche

1. Trägerplatte (1, 4, 7, 12, 19, 24, 25, 27, 33, 34) für ein Zusatzbett (38, 40, 42), das an einem Fahrzeugsitz (15, 21, 22, 29, 30) in einem Fahrzeug für eine temporäre Nutzung des Zusatzbettes (38, 40, 42) einrichtbar ist, wobei der Fahrzeugsitz (15, 21, 22, 29, 30) eine Sitzboden-Polsterung (16) und oberhalb der Sitzboden-Polsterung (16) eine Rückenlehnen-Polsterung (17) umfasst, wobei das aufgebaute Zusatzbett (38, 40, 42) für eine Nutzung im Bereich oberhalb der Sitzboden-Polsterung (16) des Fahrzeugsitzes (15, 21, 22, 29, 30) ausgebildet ist, **dadurch gekennzeichnet, dass** die Trägerplatte (1, 4, 7, 12, 19, 24, 25, 27, 33, 34) einen Auflage-Flächenabschnitt (2, 8) und einen Steckabschnitt (3, 9) aufweist, wobei der Steckabschnitt (3, 9) derart ausgebildet ist, dass der Steckabschnitt (3, 9) der Trägerplatte (1, 4, 7, 12, 19, 24, 25, 27, 33, 34) an dem Fahrzeugsitz (15, 21, 22, 29, 30) in einen Spaltbereich (18) zwischen einem unteren Ende der Rückenlehnen-Polsterung (17) und der Sitzboden-Polsterung (16) für eine klemmende Fixierung der Trägerplatte (1, 4, 7, 12, 19, 24, 25, 27, 33, 34) an dem Fahrzeugsitz (15, 21, 22, 29, 30) einsteckbar ist, wobei im eingesteckten Zustand des Steckabschnitts (3, 9) der Auflage-Flächenabschnitt (2, 8) der Trägerplatte (1, 4, 7, 12, 19, 24, 25, 27, 33, 34) an der Sitzboden-Polsterung (16) abstützbar ist.

2. Trägerplatte nach Anspruch 1, **dadurch gekennzeichnet, dass** der Steckabschnitt (3) fluchtend zum Auflage-Flächenabschnitt (2) ausgerichtet ist.

3. Trägerplatte nach Anspruch 1 oder Anspruch 2, **dadurch gekennzeichnet, dass** eine vom Steckabschnitt (9) aufgespannte Ebene versetzt ist zu einer von dem Auflage-Flächenabschnitt (8) aufgespannten Ebene.

4. Trägerplatte nach einem der vorhergehenden Ansprüche, **dadurch gekennzeichnet, dass** Steckabschnitt (3) unmittelbar an den Auflage-Flächenabschnitt (2) anschließt.

5. Trägerplatte nach einem der vorhergehenden Ansprüche, **dadurch gekennzeichnet, dass** ein Zwischenabschnitt (10) zwischen dem Auflage-Flächenabschnitt (8) und dem Steckabschnitt (9) vorhanden ist.

6. Trägerplatte nach einem der vorhergehenden Ansprüche, **dadurch gekennzeichnet, dass** der Steckabschnitt (3) und der Auflage-Flächenabschnitt (2) einstückig ausgebildet sind.

7. Trägerplatte nach einem der vorhergehenden Ansprüche, **dadurch gekennzeichnet, dass** die Trägerplatte (4, 12, 33, 34) eine Ausnehmung (13, 35) aufweist.

8. Trägerplatte nach einem der vorhergehenden Ansprüche, **dadurch gekennzeichnet, dass** die Trägerplatte (1, 4, 7, 12, 19, 24, 25, 27, 33, 34) an einen Innenraum des Fahrzeugs angepasst ausgebildet ist.

9. Zusatzbett (38, 40, 42) für eine temporäre Nutzung des Zusatzbettes (38, 40, 42) in einem Fahrzeug, wobei das Zusatzbett (38, 40, 42) an einem Fahrzeugsitz (15, 21, 22, 29, 30) in dem Fahrzeug einrichtbar ist, **dadurch gekennzeichnet, dass** eine Trägerplatte (1, 4, 7, 12, 19, 24, 25, 27, 33, 34) nach einem der vorhergehenden Ansprüche vorgesehen ist.

10. Zusatzbett nach Anspruch 9, **dadurch gekennzeichnet, dass** eine Matratze (37, 41) vorgesehen ist, welche auf die Trägerplatte (1, 4, 7, 12, 19, 24, 25, 27, 33, 34) auflegbar ist.

11. Zusatzbett nach Anspruch 9 oder Anspruch 10, **dadurch gekennzeichnet, dass** die Matratze (37, 41) eine Kontur aufweist, welche im eingerichteten Zustand des Zusatzbettes (38, 40, 42) auf das Zusatzbett (38, 40, 42) umgebende Bereiche im Fahrzeug angepasst ist.

12. Zusatzbett nach einem der Ansprüche 9 bis 11, **dadurch gekennzeichnet, dass** das Zusatzbett (38, 40, 42) an zwei seitlich benachbarten Fahrzeugsitzen (15, 21, 22, 29, 30) einrichtbar ist, wobei zwei Trägerplatten (1, 4, 7, 12, 19, 24, 25, 27, 33, 34) vorgesehen sind, welche an dem jeweiligen Fahrzeugsitz (15, 21, 22, 29, 30) in einen Spaltbereich (18) zwischen einem unteren Ende der Rückenlehnen-Polsterung (17) und der Sitzboden-Polsterung (16) für eine klemmende Fixierung der Trägerplatte (1, 4, 7, 12, 19, 24, 25, 27, 33, 34) an dem Fahrzeugsitz (15, 21, 22, 29, 30) einsteckbar ist.

13. Zusatzbett nach einem der Ansprüche 9 bis 12, **dadurch gekennzeichnet, dass** ein Zwischenelement (27) vorgesehen ist, welches zwischen zwei Trägerplatten (19) vorhanden ist.

14. Zusatzbett nach einem der Ansprüche 9 bis 13, **dadurch gekennzeichnet, dass** einer Verbindungsanordnung zur randseitigen lösbaren Verbindung von einender zugewandten Rändern von zwei Trägerplatten (1, 4, 7, 12, 19, 24, 25, 27, 33, 34) im eingerichteten Zustand des Zusatzbettes (38, 40, 42).

15. Zusatzbett nach einem der Ansprüche 9 bis 14, **dadurch gekennzeichnet, dass** eine flexible Umhüllung (43) vorgesehen ist, wobei innerhalb der Umhüllung (43) die Trägerplatte (1, 4, 7, 12, 19, 24, 25, 27, 33, 34) und die Matratze (37, 41) des Zusatzbettes (38, 40, 42) im nicht genutzten Zustand des Zusatzbettes (38, 40, 42) unterbringbar sind.
